# EUROPÄISCHE PATENTSCHRIFT

(11) **EP 3 609 123 B1**
(45) Veröffentlichungstag und Bekanntmachung des Hinweises auf die Patenterteilung: **26.01.2022**
(21) Anmeldenummer: 19187884.2
(22) Anmeldetag: 23.07.2019
(51) Int. Cl.: H04L 9/32, G06F 21/64, G06Q 10/10, G06Q 20/12, G06Q 20/20, G06Q 20/22, G07F 17/24

(54) **VERFAHREN UND VORRICHTUNG ZUM PRÜFEN EINES SACHVERHALTES IN EINEM DEZENTRALEN TRANSAKTIONSSYSTEM**
METHOD AND DEVICE FOR TESTING A SITUATION IN A DECENTRALIZED TRANSACTION SYSTEM
PROCÉDÉ ET DISPOSITIF DE VÉRIFICATION DE LA SITUATION ACTUELLE DANS UN SYSTÈME DE TRANSACTION DÉCENTRALISÉ

(30) Priorität: 08.08.2018 DE 102018213304
(43) Veröffentlichungstag der Anmeldung: 12.02.2020
(73) Patentinhaber: Robert Bosch GmbH, 70442 Stuttgart (DE)
(72) Erfinder: Ververis, Diamantis, 70376 Stuttgart (DE); Berg, Florian, 71732 Tamm (DE); De Waard, Danny, 74354 Besigheim (DE); Achar, Madhav, Troy, Michigan 48083 (US); Schaefer, Michael, 72666 Neckartailfingen (DE)

(56) Entgegenhaltungen:
- EP-A1- 3 576 031
- WO-A1-2017/180382
- ABU RAIHAN M KAMAL ET AL: "Packet-level attestation (PLA)", ACM TRANSACTIONS ON SENSOR NETWORKS, ACM, 2 PENN PLAZA, SUITE 701 NEW YORK NY 10121-0701 USA, Bd. 9, Nr. 2, 1. April 2013 (2013-04-01), Seiten 1-28, XP058013367, ISSN: 1550-4859, DOI: HTTP://DX.DOI.ORG/10.1145/2422966.2422976

## Beschreibung

Die vorliegende Erfindung betrifft ein Verfahren zum Prüfen eines Sachverhaltes in einem dezentralen Transaktionssystem. Die vorliegende Erfindung betrifft darüber hinaus eine entsprechende Vorrichtung, ein entsprechendes Computerprogramm sowie ein entsprechendes Speichermedium.

### Stand der Technik

Als dezentrales Transaktionssystem, Transaktionsdatenbank oder dezentral geführtes Kontobuch (*distributed ledger*) wird in der Informatik jedwedes Rechnernetz verstanden, das mittels eines gemeinsamen Konsensusprotokolls eine Übereinkunft über Reihenfolge und Inhalt bestimmter Transaktionen trifft. Im Folgenden wird der Begriff in einem weiten Sinne verwendet, der private und öffentliche Systeme gleichermaßen erfasst.

EP3295349A1 offenbart ein computerimplementiertes Verfahren und System zur Überprüfung der Integrität einer Computersoftware zur Installation unter Verwendung einer verteilten Hash-Tabelle und eines in einem Rechner-Rechner-Netzwerk (*peer-to-peernetwork*, P2P) verteilten Hauptbuchs. Das Verfahren umfasst das Bestimmen von Metadaten, die mit einem Transaktionsdatensatz verknüpft sind, der in dem verteilten Hauptbuch gespeichert ist. Ein Hinweis auf einen Eintrag, der in der verteilten Hash-Tabelle gespeichert ist, kann aus den Metadaten bestimmt werden. Das Verfahren umfasst ferner das Bestimmen eines dritten Hash-Werts basierend auf der Computersoftware und das Bestimmen eines vierten Hash-Werts aus dem Eintrag in der verteilten Hash-Tabelle. Das Verfahren umfasst ferner das Vergleichen des dritten Hash-Werts und des vierten Hash-Werts und das Verifizieren der Integrität der Computersoftware basierend auf dem Vergleichen des dritten Hash-Werts und des vierten Hash-Werts.

WO 2017/180382 A1 (PCMS HOLDINGS INC [US]) 19. Oktober 2017 sowie EP 3 576 031 A1 (BOSCH GMBH ROBERT [DE]) 4. Dezember 2019 offenbaren Verfahren nach dem Oberbegriff des Anspruchs 1.

### Offenbarung der Erfindung

Die Erfindung stellt ein Verfahren zum Prüfen eines Sachverhaltes in einem dezentralen Transaktionssystem, eine entsprechende Vorrichtung, ein entsprechendes Computerprogramm sowie ein entsprechendes Speichermedium gemäß den unabhängigen Ansprüchen bereit.

Der vorgeschlagene Ansatz fußt auf der Erkenntnis, dass ein Eintrag in einem dezentralen Transaktionssystem durch ein fehlerhaftes Gerät oder durch andere äußere Einflüsse kompromittiert sein kann. Neben diesen Einflüssen kann alleine die Tatsache, dass es ein einziges Gerät ist, welches das Ereignis ermittelt hat, dazu führen, dass Daten, Informationen und deren Wahrheitswert in einem dezentralen Transaktionssystem von Dritten nicht anerkannt werden. Insbesondere in Szenarien, in welchen die gespeicherten Daten als Beweis für die Verantwortung eines Dritten für einen bestimmten Zustand dienen sollen, kann die Korrektheit der Daten von dem genannten Dritten angefochten werden.

Um diesen Mangel zu beheben, besteht ein Grundgedanke des nachfolgend beschriebenen Verfahrens darin, durch das "Beauftragen" weiterer Geräte gewisse Umweltgrößen (beispielsweise Temperatur, Luftfeuchtigkeit, Helligkeit oder Erschütterung) oder auch andere Zustände zu dokumentieren (etwa in Bild- oder Videoaufnahmen) und diese Dokumentation für das im obigen Sinne "beauftragende" Gerät in ein dezentrales Transaktionssystem zu speichern.

Das solchermaßen beauftragte Gerät speichert die Daten im Auftrag des ersten Geräts und erfüllt somit gleichsam die Funktion eines Zeugen für einen bestimmten Zustand zu einem bestimmten Zeitpunkt. Die betreffenden Daten können hierzu sowohl direkt in das dezentrale Transaktionssystem als auch an einem zentralen Speicherort abgelegt werden.

Bei der Speicherung an einem zentralen Speicherort bildet das "beweisende" Gerät die Prüfsumme des Datensatzes und legt diesen unter Angabe des Speicherortes des Datensatzes in das dezentrale Transaktionssystem ab.

Ähnlich dem Vorgehen, nach dem in einem dezentralen Transaktionssystem Transaktionen von mehreren unabhängigen Parteien bestätigt werden und somit ein Konsens über den Stand der Informationen hergestellt wird, wird bei der vorliegenden Lösung somit gewissermaßen ein Konsens auf der Ebene der Datenquellen erzeugt.

Ein Vorzug dieser Lösung liegt in der chronologischen, manipulationssicheren und somit beweisfähigen Dokumentation bestimmter Zustände, Umweltgrößen und deren Abweichungen ohne die Notwendigkeit eines manuellen Eingriffs. Die beauftragten Geräte können ihren Dienst mittels digitaler Verträge im Transaktionssystem selbst gegenüber dem beauftragenden Gerät abrechnen, welches die erhobene Gebühr in eben diesem System direkt begleicht.

Durch die in den abhängigen Ansprüchen aufgeführten Maßnahmen sind vorteilhafte Weiterbildungen und Verbesserungen des im unabhängigen Anspruch angegebenen Grundgedankens möglich.

### Kurze Beschreibung der Zeichnungen

Ausführungsbeispiele der Erfindung sind in den Zeichnungen dargestellt und in der nachfolgenden Beschreibung näher erläutert. Es zeigt:
Figur 1 das Flussdiagramm eines Verfahrens gemäß einer ersten Ausführungsform.
Figur 2 eine erste Phase des Verfahrens.
Figur 3 eine zweite Phase des Verfahrens.
Figur 4 ein Beispiel für den Beweis von Unfällen in Parkhäusern.

### Ausführungsformen der Erfindung

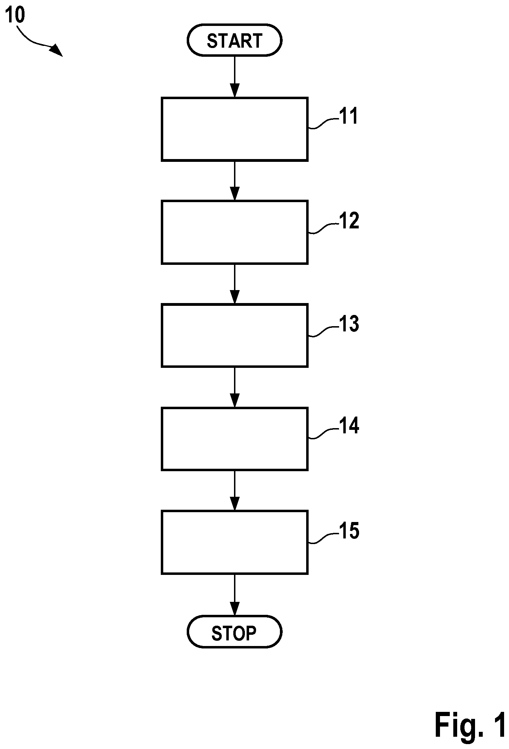

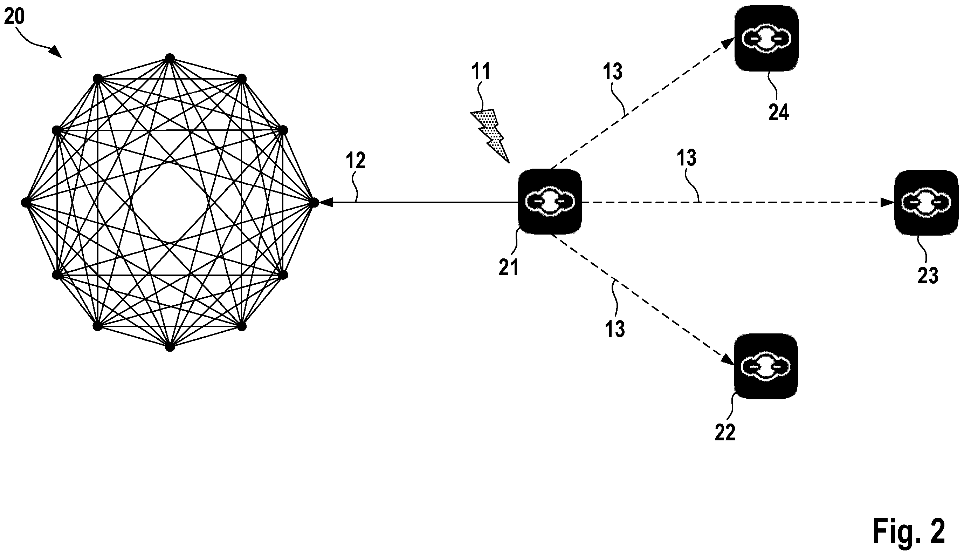

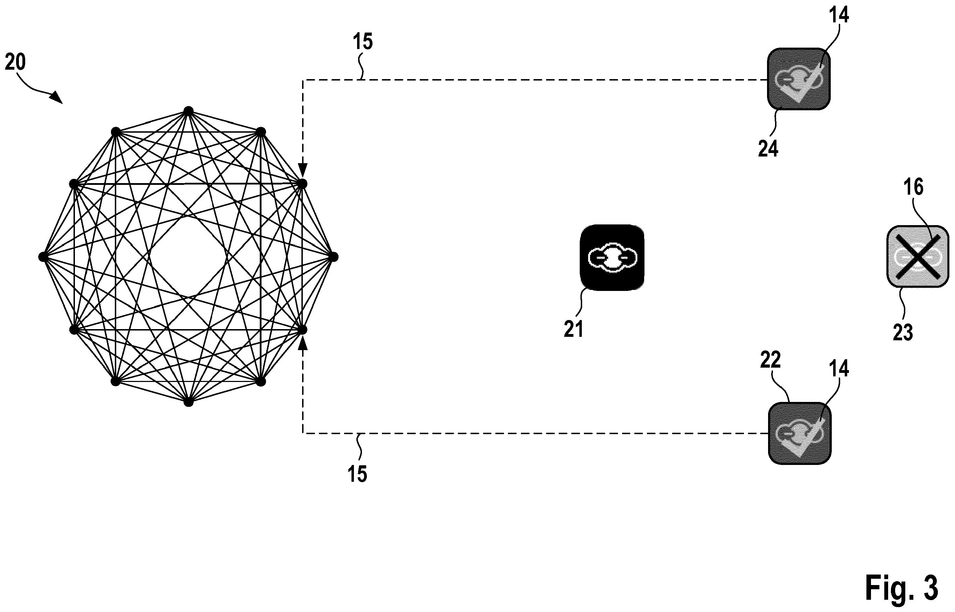

Figur 1 illustriert den grundlegenden Ablauf eines erfindungsgemäßen Verfahrens (10), dessen Ablauf nunmehr beispielhaft anhand der Blockdiagramme gemäß Figur 2 und Figur 3 erläutert sei.

In einem vorbereitenden, zeichnerisch nicht dargestellten Schritt melden sich die beteiligten Geräte (21, 22, 23, 24) gegenseitig an und setzen einander davon in Kenntnis, über welche Fähigkeiten sie verfügen. Auf diese Weise können die Geräte (21, 22, 23, 24) ein P2P-Rechnernetz bilden, oder aber ein Teil eines vorhandenen Netzwerks, in welchem Daten direkt zwischen zwei Knoten oder mehreren ausgetauscht werden können. Darunter sind insbesondere Geräte (21), deren Aufgabe unter anderem darin besteht, bestimmte Situationen zu beobachten. Abweichungen (11) von vordefinierten Soll-Zuständen oder andere als unerwartet definierte Zustände können hierbei eine Protokollierung (12) erfordern.

Erkennt nun ein derartiges Gerät (21) einen solchen Zustand, so wird dieser protokolliert (12). Hierzu werden die betreffenden Daten in einem dezentralen Transaktionssystem (20) abgelegt. Die Daten können, wie oben beschrieben, direkt als Teil der Transaktion oder an einem zentralen Speicherort abgelegt werden. Werden die Daten als Teil der Transaktion im dezentralen Transaktionssystem (20) abgelegt, so werden zumindest eine Kennung des Gerätes und die Daten der Abweichung (11) selbst vermerkt. Werden die Daten an einem zentralen Speicherort gespeichert, so wird anstelle der Daten der Abweichung selbst (11) die Adresse des gespeicherten Datensatzes der Abweichung (11) sowie dessen Prüfsumme oder Streuwert (*hash*) gesichert.

Zur Verifikation der Daten fordert das erste Gerät (21) nunmehr andere Geräte (22, 23, 24) dazu auf (13), den ermittelten Zustand zu bestätigen. Dabei können die Daten, die das Ereignis verifizieren, andere Messgrößen abbilden als diejenige, durch welche das Ereignis selbst definiert ist. Diese Bestätigung geschieht mittels eines Aufrufs an alle übrigen in dem oben beschriebenen Verbund (21, 22, 23, 24) angemeldeten Geräte (22, 23, 24). Dabei wird den weiteren Geräten (22, 23, 24) neben der Kennung des aufrufenden Gerätes (21) mitgeteilt, was ermittelt oder erfasst werden soll - etwa eine Messung der Temperatur oder eine Bildaufnahme der Umgebung. Die Entscheidung, was genau getan werden soll, kann sowohl vom ersten Gerät (21) als auch von den anderen, das Ereignis bestätigenden Geräten (22, 23, 24) getroffen werden. Hierzu können auch Systeme der künstlichen Intelligenz (KI; *artificial intelligence,* AI) zur Verwendung kommen.

In einer bevorzugten Ausführungsform wird der von dem Aufrufer (21) ermittelte Zustand den weiteren Geräten (22, 23, 24) bewusst nicht mitgeteilt, um die Unabhängigkeit deren eigener Messungen nicht zu beeinflussen. Dies vermindert die Gefahr einer Manipulation der Ergebnisse. Es wird beispielsweise lediglich die Messgröße und nicht der erwartete Messwert bezeichnet.

Die auf diese Weise beauftragten Geräte (22, 23, 24) erfassen (14) und protokollieren (15) den gewünschten Zustand ebenfalls entweder direkt im dezentralen Transaktionssystem (20) oder, wie oben beschrieben, an einem zentralen Speicherort und vermerken dabei die eigene Kennung, Daten der Abweichung (11) sowie die übermittelte Kennung des aufrufenden Gerätes (21). Werden die Daten der Abweichung (11) an einem zentralen Speicherort gespeichert, so wird an ihrer Stelle auch in diesem Fall die Adresse des gespeicherten Datensatzes der Abweichung (11) sowie dessen Prüfsumme oder Streuwert gesichert. Es versteht sich, dass eine Protokollierung (15) für diejenigen Geräte (23) entfällt, welche die angeforderte Größe nicht ermitteln können (16).

Anhand der solchermaßen protokollierten Daten kann die Abweichung (11) schließlich entweder bestätigt oder widerlegt werden. Würde im Szenario gemäß der Figuren 2 und 3 etwa das Gerät 21 einen Betrag von 120 für eine gegebene Messgröße X, das Gerät 22 einen Betrag von 119 für die Messgröße *Y* und das Gerät 24 einen Betrag von 121 für die Messgröße Z bestimmen, so würde das Ereignis mit einem Betrag von |*X*| = 120 beschrieben, wobei ein allgemeiner Konsens über die Verifikation der Abweichung (11) bestünde. Würde hingegen das Gerät 22 einen Betrag von 87 für die Messgröße Y und das Gerät 24 einen Betrag von 89 für die Messgröße Z protokollieren, so bestünde ein Dissens hinsichtlich des behaupteten Ereignisses, das vorliegend vielmehr mit einem Betrag von |*X*| = 88 beschrieben würde.

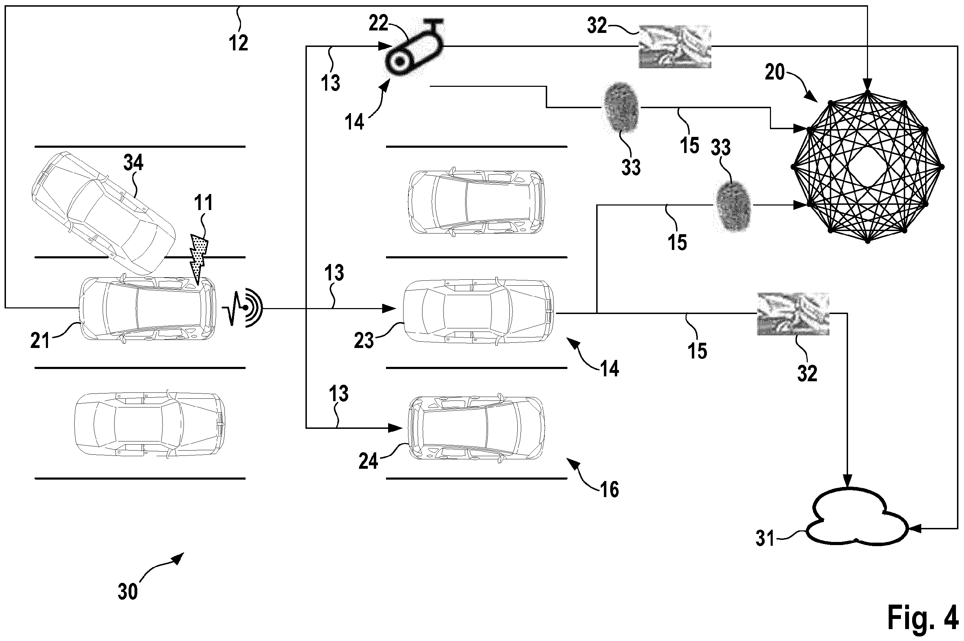

Figur 4 verdeutlich diese Herangehensweise anhand des Parkplatzschadens eines Autos.

Ein geparktes Fahrzeug (21) wird in Abwesenheit des Fahrers auf einem Parkhaus (30) von einem anderen Fahrzeug (34) beschädigt. Der Fahrer des Fahrzeugs (34), der den Unfall (11) verschuldet, verlässt den Unfallort, entweder bewusst, oder weil er den Unfall (11) nicht bemerkt hat.

Das Unfallereignis (11) wird über Sensoren, die im beschädigten Fahrzeug (21) verbaut sind, ermittelt und mithilfe der erhobenen Sensordaten in einem dezentralen Transaktionssystem (20) dokumentiert. Die zur Ermittlung und Dokumentation notwendigen Daten können beispielweise Erschütterungsdaten sein.

Nun ist es anderen, mit Sensoren ausgestatteten Fahrzeugen (23, 24) allerdings nicht möglich, dieses Ereignis (11) mithilfe von Daten gleicher Art zu verifizieren, da diese die Erschütterung eines anderen Fahrzeugs nicht ermitteln können.

Das beschädigte Fahrzeug (21) fordert dennoch die anderen Fahrzeuge (23, 24) und eine im Parkhaus (30) verbaute Kamera (21) auf, das Ereignis (11) mithilfe von Bildern zu verifizieren und somit den Unfall zu bezeugen. Dasjenige Fahrzeug (23), welches die Möglichkeit hat, ein Bild des Unfalls (11) zu machen und in entsprechender Position zum beschädigten Fahrzeug (21) steht, nimmt das Bild beispielsweise mit einer verbauten Rückfahrkamera auf (14). Weiter wird, wie bereits beschrieben, die Überwachungskamera (21) im Parkhaus (30) aufgefordert, ein Bild des Unfalls (11) zu machen (14). Es können auch zeichnerisch nicht dargestellte Personen über eine Applikation auf deren Mobiltelefon zur Bezeugung des Unfalls (11) aufgefordert werden. Diese würden den Unfall (11) in diesem Fall ihrerseits durch ein Foto des Ereignisses (11) bezeugen. Ein weiteres Fahrzeug (24) ist im vorliegenden Beispiel nicht in der Lage, den Unfall (11) im Bild zu dokumentieren (16).

Von den Fotos, welche in diesem Fall als Beweis für den Unfall (11) dienen, werden anschließend Prüfsummen (33) errechnet und danach auf einem zentralen Speicher (31) abgelegt oder langfristig im Fahrzeug gehalten. Werden die Bilder langfristig im Fahrzeug gehalten, wird die entsprechende Adresse des Bildmaterials im dezentralen Transaktionssystem abgelegt und zum Zeitpunkt einer notwendigen Freigabe zur Verfügung gestellt. Die als Zeugen fungierenden Geräte (22, 23) legen im dezentralen Transaktionssystem (20) jeweils eine Transaktion ab (12), in welcher sie ihre Identifikation, die Adresse des gespeicherten Datensatzes (32), hier in Gestalt eines Bildes, dessen Prüfsumme und die Identifikation des beschädigten und zur Protokollierung auffordernden Fahrzeugs (21) speichern.

Auf den Bildern (32), die von den Geräten (23, 24) gemacht wurden (14), kann der Unfallverursacher (34) abgebildet sein und somit eine entsprechende Verantwortlichkeit ermittelt werden.

Anhand der besagten Transaktion, welche die Unveränderbarkeit der beweisenden Daten, in diesem Fall der Fotos (32), sicherstellt, kann die Schuld am Unfallereignis (11) eindeutig dem Verursacher (34) zugewiesen werden, ohne dass dem geschädigten Fahrzeug (21) eine Manipulation der Daten oder eine Kompromittierung der Daten durch Fehlfunktion vorgeworfen werden könnten.

Das beauftragende Fahrzeug (21) kann über das verwendete dezentrale Transaktionssystem (20) den beweisenden Geräten (22, 23) eine angemessene Aufwandsentschädigung zukommen lassen.

## Patentansprüche

1. Verfahren (10) zum Prüfen eines durch eine Abweichung (11) von einem vorgegebenen Zustand definierten Sachverhaltes (11) in einem dezentralen Transaktionssystem (20),
mit folgenden Merkmalen:
- der Sachverhalt (11) wird durch ein erstes Gerät (21) in dem Transaktionssystem (20) erkannt,
- der Sachverhalt (11) wird durch das erste Gerät (21) mittels des Transaktionssystems (20) protokolliert (12),
- weitere Geräte (22, 23, 24) in dem Transaktionssystem (20) werden vom ersten Gerät (21) aufgefordert (13), bestimmte Daten zu erfassen (14),
- die Daten werden durch die weiteren Geräte (22, 23) erfasst (14),
- die erfassten Daten werden durch die weiteren Geräte (22, 23) mittels des Transaktionssystems (20) protokolliert (15) und
- der Sachverhalt (11) wird in dem Transaktionssystem (20) anhand der protokollierten Daten bestätigt oder widerlegt,
**gekennzeichnet durch** folgendes Merkmal:
- das Protokollieren (12, 15) erfolgt durch ein Ablegen eines Datensatzes (32) in einem zentralen Speicher (31) und eines Streuwertes (33) des Datensatzes im Transaktionssystem (20).

2. Verfahren (10) nach Anspruch 1, **gekennzeichnet durch** folgende Merkmale:
- den weiteren Geräten (22, 23, 24) wird eine Kennung des ersten Gerätes (21) übermittelt und
- die Kennung wird durch die weiteren Geräte (22, 23) gemeinsam mit den Daten protokolliert (15).

3. Verfahren (10) nach einem der Ansprüche 1 oder 2, **gekennzeichnet durch** mindestens eines der folgenden Merkmale:
- die zu erfassenden Daten umfassen Bilddaten oder
- die zu erfassenden Daten umfassen physikalische Messdaten.

4. Verfahren (10) nach einem der Ansprüche 1 bis 3, **gekennzeichnet durch** folgendes Merkmal:
- das Protokollieren (12, 15) umfasst das Ablegen eines Zeitstempels.

5. Computerprogramm, welches Anweisungen umfasst, die bei der Ausführung des Programms durch einen Computer diesen veranlassen, das Verfahren (10) nach einem der Ansprüche 1 bis 4 auszuführen.

6. Maschinenlesbares Speichermedium, auf dem das Computerprogramm nach Anspruch 5 gespeichert ist.

7. Vorrichtung (20, 21, 22, 23, 24), die eingerichtet ist, das Verfahren (10) nach einem der Ansprüche 1 bis 4 auszuführen.

## Claims

1. Method (10) for testing a situation (11), defined by a deviation (11) from a predefined state, in a decentralized transaction system (20),
having the following features:
- the situation (11) is recognized by a first device (21) in the transaction system (20),
- the situation (11) is logged (12) by the first device (21) by means of the transaction system (20),
- further devices (22, 23, 24) in the transaction system (20) are asked (13) by the first device (21) to capture (14) specific data,
- the data are captured (14) by the further devices (22, 23),
- the captured data are logged (15) by the further devices (22, 23) by means of the transaction system (20), and
- the situation (11) is confirmed or refuted in the transaction system (20) on the basis of the logged data,
**characterized by** the following feature:
- the logging (12, 15) is effected by storing a data set (32) in a central memory (31) and a stray value (33) of the dataset in the transaction system (20).

2. Method (10) according to Claim 1,
**characterized by** the following features:
- an identifier of the first device (21) is transmitted to the further devices (22, 23, 24), and
- the identifier is logged (15) by the further devices (22, 23) together with the data.

3. Method (10) according to either of Claims 1 and 2, **characterized by** at least one of the following features:
- the data to be captured comprise image data or
- the data to be captured comprise physical measurement data.

4. Method (10) according to one of Claims 1 to 3, **characterized by** the following feature:
- the logging (12, 15) comprises the storage of a time stamp.

5. Computer program comprising instructions that, when the program is executed by a computer, prompt said computer to carry out the method (10) according to one of Claims 1 to 4.

6. Machine-readable storage medium on which the computer program according to Claim 5 is stored.

7. Apparatus (20, 21, 22, 23, 24) designed to carry out the method (10) according to one of Claims 1 to 4.

## Revendications

1. Procédé (10) permettant de vérifier une situation actuelle (11) définie par un écart (11) par rapport à un état prédéfini dans un système de transaction décentralisé (20),
comprenant les particularités suivantes :
- la situation actuelle (11) est identifiée par un premier appareil (21) dans le système de transaction (20),
- la situation actuelle (11) est consignée (12) par le premier appareil (21) au moyen du système de transaction (20),
- d'autres appareils (22, 23, 24) dans le système de transaction (20) sont invités (13) par le premier appareil (21) à collecter certaines données (14),
- les données sont collectées (14) par les autres appareils (22, 23),
- les données collectées sont consignées (15) par les autres appareils (22, 23) au moyen du système de transaction (20), et
- la situation actuelle (11) est confirmée ou réfutée dans le système de transaction (20) à l'aide des données consignées,
**caractérisé par** la particularité suivante :
- la consignation (12, 15) a lieu par une mise en mémoire d'un ensemble de données (32) dans une mémoire centrale (31) et d'une valeur de dispersion (33) de l'ensemble de données dans le système de transaction (20) .

2. Procédé (10) selon la revendication 1, **caractérisé par** les particularités suivantes :
- un identifiant du premier appareil (21) est transmis aux autres appareils (22, 23, 24), et
- l'identifiant est consigné (15) par les autres appareils (22, 23) conjointement avec les données.

3. Procédé (10) selon l'une quelconque des revendications 1 et 2, **caractérisé par** au moins l'une des particularités suivantes :
- les données à collecter comprennent des données d'image, ou
- les données à collecter comprennent des données de mesure physiques.

4. Procédé (10) selon l'une quelconque des revendications 1 à 3, **caractérisé par** la particularité suivante :
- la consignation (12, 15) comprend la mise en mémoire d'un horodatage.

5. Programme informatique qui comprend des instructions qui font, lorsque le programme est exécuté par un ordinateur, que celui-ci exécute le procédé (10) selon l'une quelconque des revendications 1 à 4.

6. Support de stockage lisible par machine sur lequel est stocké le programme informatique selon la revendication 5.

7. Dispositif (20, 21, 22, 23, 24), qui est aménagé pour exécuter le procédé (10) selon l'une quelconque des revendications 1 à 4.
